# EUROPEAN PATENT APPLICATION

(11) **EP 4 414 165 A1**
(43) Date of publication of application: **14.08.2024**
(21) Application number: 23155599.6
(22) Date of filing: 08.02.2023
(51) Int. Cl.: B32B 5/02, B32B 5/26, B32B 5/28, B29C 43/20

(54) **A FIBER COMPOSITE PRODUCT AND A METHOD FOR PRODUCING THEREOF**

(71) Applicant: Volvo Car Corporation, 405 31 Göteborg (SE)
(72) Inventor: AXELSSON, Martin, 40531 Göteborg (SE); MAGNUSSON, Jeannette, 40531 Göteborg (SE); EWERT, Mia, 40531 Göteborg (SE); MÖLLER, Peter, 40531 Göteborg (SE); GUTKIN, Renaud, 40531 Göteborg (SE); OTTOSSON NORDIN, Maria, 40531 Göteborg (SE); ROSENBERG, Klara, 40531 Göteborg (SE)
(74) Representative: Maiwald GmbH

(57) **Abstract**

The disclosure relates to a fiber composite product (10) for an automotive interior or exterior component. The fiber composite product (10) comprises a first layer (11) comprising a structured natural fiber fabric embedded within a solidified matrix of thermoplastic resin; a second layer (12) comprising natural fibers in form of a non-woven mat within a solidified matrix of thermoplastic resin, which is attached at the first layer (11), and injections of thermoplastic resin (13) onto the second layer.

## Description

The present disclosure relates to a fiber composite product for an automotive interior or exterior component and a method for producing a fiber composite product for an automotive interior or exterior component.

A need for sustainable interior and exterior materials in automotive industry is rapidly increasing to meet sustainability targets set by both internal and external stakeholders. Especially materials that can reduce weight and use of fossil-based plastics are becoming more and more important. If also an appearance of such materials is esthetically appealing it creates great opportunities to achieve lightweight, sustainable and attractive interiors and exteriors of vehicles.

Existing interior panels are often built up by several layers based on various plastics and materials. Such constructions are heavy and require high amounts of fossil-based plastics and complex productions processes. Furthermore, mixing of diverse materials makes recycling at end-of-life very difficult.

A commonly used material in automotive components, for example in door panels, is natural fiber non-woven composite. Because of their unappealing appearance, these components need additional covering with surface materials such as foamed materials or thin semi-transparent plastic foils.

Hence, there may be a need for providing a composite product with improved esthetics for an automotive interior or exterior component, which may fulfill requirements of lightweight, sustainable or appealing automotive components, as well as a corresponding method for producing such fiber composite product for an automotive interior or exterior component.

The problem is at least partially solved or alleviated by the subject matter of the independent claims of the present disclosure, wherein further examples are incorporated in the dependent claims.

According to a first aspect, there is provided a fiber composite product for an automotive interior or exterior component. The fiber composite product comprises a first layer, a second layer and injections of thermoplastic resin onto the second layer. The first layer comprises a structured natural fiber fabric within a solidified matrix of thermoplastic resin. The second layer comprises natural fibers in form of a non-woven mat within a solidified matrix of thermoplastic resin. The second layer is attached at the first layer. The fiber composite product further comprises injections of thermoplastic resin onto the second layer.

The first layer comprises a structured natural fiber fabric with a solidified matrix of thermoplastic resin. Structured natural fiber fabric may be of fine-grade (natural) fibers which can be used to make long fibers (continuous fibers) suitable to be used in weaving etc. Fine-grade fibers may be longer fibers than the low-grade fibers. They may provide a nice appearance of the material. Fine-grade fibers may have a higher quality and homogeneity than the low-grade fibers. Length of the fiber-grade fibers may be in a range of 10-150 cm. Width of the fiber-grade fibers may be in a range of 20-100 µm. Length-to-breadth ratio may range from 5000:1 to 20000:1.

Low-grade fibers may be shorter than the fine-grade fibers. Low-grade fibers may have a varying quality and overall a lower quality than the fine-grade fibers. Length of the low-grade fibers may be in a range of 0,1-100 cm. Width of the low-grade fibers may be in a range of 20-100 µm. Length-to-breadth ratio may range from 1000:1 to 5000:1. Typical length for shives, which may be contained in the low-grade fibers may be 5-10 mm and typical width may be 0,4-1 mm.

Natural fibers may be spun into threads or yarns that may be woven or knit into a natural fiber based material, such as a preform, which may be processes into a natural fiber fabric. A structured fabric may mean that the natural fibers are aligned in a specific manner, for instance in parallel to each other or in a repetitive pattern. The natural fibers may be woven, braided, knitted or the like to form a structured fabric. Structured natural fiber fabric may provide a higher strength-to-weight ratio compared to the second layer. The first layer can be, accordingly, thinner and have a lower weight than the second layer. The natural fiber fabric may be any kind of fabric with a natural fiber basis. Natural fibers used in the natural fiber fabric may come from plants, animals, or minerals. Some examples may be flax fibers, hemp, jute, kenaf, sisal, abaca, pineapple and coir.

The natural fiber fabric may be embedded into a matrix of thermoplastic resin while the matrix is in a liquid or semi-liquid form. The matrix may be cooled down to solidify, fixing the structured natural fiber fabric therein. Alternatively, thermoplastic resin may be applied onto the first layer as a thermoplastic layer instead of embedding the natural fiber fabric into the thermoplastic resin matrix. The thermoplastic layer may be applied onto the first layer in a liquid or semi-liquid form and cool down to solidify on the structured natural fiber fabric. The structured natural fiber fabric may be also consolidated by cooling down the mixture with or without applying pressure. The structured natural fiber fabric of this composition that is used in the first layer may provide improved mechanical properties as well as have a nice appearance and thus, a need for an additional surface processing or usage of an additional surface material, such as a coating may be eliminated.

The second layer comprises also natural fibers within a solidified matrix of thermoplastic resin but this time in a non-woven form. The non-woven mat may be embedded in a matrix of thermoplastic resin while the matrix is in a semi-liquid form and the thermoplastic resin may be solidified/consolidated afterwards, forming the second layer. Mat may be a type of fabric. The thermoplastic resin matrix may be of polypropylene, polyethene, polystyrene, polybutylene adipate terephthalate, polyvinyl chloride, polylactic acid, polyhydroxyalkanoates, acrylonitrile butadiene styrene or combinations thereof. Thermoplastic resin matrix may be a thermoplastic binder and these terms may be used interchangeably in the context of the present invention.

A low-grade and/or recycled natural fiber may be used in the second layer. The low-grade fiber of the second layer may have the same qualifications as the low-grade fiber mentioned for the first layer in para. [0009]. Low-grade fibers may provide a higher flexibility in shaping the layer than the fine-grade fibers. A leftover of natural fibers may be prevented or reduced after the first and the second layers are formed from the same natural fiber source. By comprising the non-woven mat, the second layer may provide a low cost layer in producing the fiber composite product while giving structural strength to the first layer.

Further, the fiber composite product comprises injections of thermoplastic resin onto the second layer. Here, on the second layer may mean that the resin may be provided at least partly inside the second layer with at least a part of the resin extending out of the second layer to form a protrusion. These injections may be called injected resin. The injected resin may form a means for allowing fastening to another product in a surrounding such as a fasting point or a fasting clip. The injected resin may also have a form of at least a reinforcing rib. The rib may be provided perpendicular to a tensile force applied as well as angular or parallel. A rib may be a long protrusion made of thermoplastic resin across or through a structure, serving to support or strengthen it. The second layer with its non-woven structure may provide space for injected resin. The injected resin may contribute to a strength and endurance of the fiber composite product. Accordingly, the injected resin may be functionally and/or chemically (in terms of substance) different to the thermoplastic resin of the first and/or the second layers. Therefore, the fiber composite product may have a multifunctional use. A further post-treatment process may be herewith avoided.

The fiber composite product, in its simplest construction may consist of only two types of materials. Accordingly, it may be easy to produce as well as recycle. Although comprising the same base materials (natural fibers and thermoplastic resin), different structures of the first and second layers may provide different functions to the fiber composite product, i.e. they may add strength while reducing weight.

In an example, the fiber composite product may consist of only the structured first layer. Especially in case the first layer has a woven structure, the first layer may be provided with increased strength. Accordingly, the second layer may be excluded from the fiber composite product. In this example, thermoplastic resin injections may be provided on the first layer. Therefore in this example, the first layer alone may have a multifunctional use. A further post-treatment process may be herewith avoided or at least reduced. The woven and thermoplastic resin containing first layer may provide the fiber composite product with an esthetically appealing look as well as maintaining a high strength, reduced weight and less plastic content.

In another example, the fiber composite product may consist of only the first layer and the second layer. In this example, the thermoplastic injections may be eliminated. In this case, the fiber composite product may be assembled with its surrounding by welding (for instance ultrasonic welding) or gluing or any other fastening method.

According to an embodiment of the disclosure, the first layer may comprise natural fiber unidirectional tape within thermoplastic resin. Natural fibers may be processed and aligned unidirectionally to form a unidirectional tape. The unidirectional tapes may have a high strength-to-weight ratio and therefore may be very light weight. The unidirectional tapes may be especially suitable for usage in producing simple, flat components. The natural fiber fabric may be a combination of multiple natural fiber unidirectional tapes (may be placed in parallel or angular) with thermoplastic resin. Natural fiber fabric comprising the natural fiber unidirectional tape may provide good mechanical strength as well as an appealing look to the fiber composite product.

According to an embodiment, the structured natural fiber fabric may be created by commingled natural fiber yarns comprising natural fibers and thermoplastic resin fibers. Commingling, in other words mixing, the natural fibers and the thermoplastic resin fibers may create a commingled yarn. The commingled yarn may be in a form of a hybrid yarn. Commingled yarns can be further commingled with other yarns. By commingling, the thermoplastic resin fiber may be already integrated in the natural fiber yarn. Thus, a need for post-treatment of the natural fiber yarn for integrating the thermoplastic resin therein may be avoided, which is often a complex and time consuming process, and require extra tooling and equipment. Commingling may be advantageous over other impregnation methods as the other methods usually require a two-step process; for instance weaving followed by impregnation. By commingling, a single weaving step may create the fabric containing the thermoplastic resin. Further the natural fiber fabric may be structured precisely for integrating thermoplastic resin at specific regions of the produced composite product. When the fabric and the thermoplastic resin is created by commingled natural fiber yarn, while providing low weight, a superior strength may also be ensured.

According to an embodiment, alternative to the commingled yarn based natural fibers fabric, the combination of natural fiber fabric and thermoplastic resin may also comprise pre-impregnated preform comprising laminated thermoplastic film, powder thermoplastic resin, thermoplastic binder or thermoplastic foil. In an advantageous embodiment, the thermoplastic foil may be added onto a dry fabric. The thermoplastic resin/binder may be combined with the dry fabric by, for instance autoclave impregnation.

In an embodiment, the fiber composite product may have a ratio of natural fibers to synthetic material (for instance, plastic based materials such as thermoplastic resin) between 20:80 by weight and 80:20 by weight, respectively, or between 40:60 by weight and 60:40 by weight, respectively or 50:50 by weight. Changing the ratio of natural fibers to synthetic material may change material properties of the fiber composite product, for instance stiffness or strength-to-weight ratio. By increasing the amount of natural fibers, usage of synthetic material (accordingly, usage of plastics) may be decreased, as well as strength-to-weight ratio may be increased compared to traditional products, which are usually composed of fossil-based materials. Accordingly, by setting the ratio of natural fibers to thermoplastic resin and thereby achieving required mechanical properties, the second layer may be excluded from the fiber composite product.

According to an embodiment, the injections may be at least half a thickness of the layer onto which it is injected. As mentioned earlier, the injections may be provided on the second layer or the first layer when there is no second layer. Alternatively, the thickness of the injections may be two third of the thickness of the first or the second layer. An example thickness of the first layer may be between 0.1 mm and 3 mm, whereas a thickness of the second layer may be between 0.5 mm and 4 mm.

In an embodiment, the first layer may at least partially cover the second layer. A size of the first layer and the second layer may be about same or the second layer may be larger than the first layer. Accordingly, a mixed visual effect of the first layer and the second layer may be provided. The before-mentioned strength-to-weight ratio may be determinant for a size ratio of the first and the second layers.

In another embodiment, the first layer and/or the second layer may be colored, textured and/or grained for providing an appealing look of the fiber composite product. In the embodiment where there is no second layer, the first layer may be colored, textured and/or grained. The colored look may be provided by using dyed natural fibers or dyed thermoplastic binder/ thermoplastic resin or a combination thereof.

In yet another embodiment, the first and/or second layer may be covered with a colored foil or fabric to complement the color of the other of the first layer and/or the second layer. Similarly, the colored foil or fabric may be present on top of the first layer and/or between the first and the second layers. The colored foil or fabric may be a non-woven fabric. The colored foil or fabric may provide additional strength and protection to the fiber composite product, aside from a nice look.

In an embodiment, the natural fibers and/or the thermoplastic resin may comprise a stabilizing agent selected from a group comprising at least a UV absorber, light stabilizer (such as Hindered Amine Light Stabilizers - HALS), heat stabilizer (such as antioxidants), moisture scavenger or combinations thereof. These stabilizing agents may protect the fiber composite product from environmental factors, as natural fiber fabric and the natural fibers of the second layer may be especially sensitive.

In an embodiment, the first layer may have a density in a range of 50-3000g/m², in particular 100-1500g/m², or 150-500g/m². In another embodiment, the second layer may have a density in a range of 300-3000g/m², in particular 450-2500g/m², or 600-1800g/m². The first and the second layers may be constructed for saving weight while providing a robust (sturdy) fiber composite product. Both of the first and second layers may contribute to the robustness of the fiber composite product. Accordingly, a total density may be around 1000-2000 g/m². In a fiber composite product having a density of 1500 g/m², the first layer may account to 400 g/m² and the second layer may account to 1100 g/m². The first layer may be still thinner (for instance to reduce costs) at 300 g/m². In this case, a thickness of the second layer can be increased to 1200 g/m². With a thicker first layer (for instance to get a better coverage) at 800 g/m², the second layer can be reduced to 700 g/m². As mentioned above, in an alternative embodiment, the fiber composite product may comprise only the first layer, in which case the density may amount to 1500 g/m² alone. However, if a coverage/see-through is acceptable at lower densities, the first layer can be reduced to around 1000 g/m². Since the first layer may be more reinforcing than the second layer, the overall density can be reduced by increasing a share of the first layer at an expense of a share of the second layer.

According to a second aspect, there is provided a method for producing a fiber composite product for an automotive interior or exterior component. The method comprises:
- providing a first layer comprising a structured natural fiber fabric within a solidified matrix of thermoplastic resin;
- attaching a second layer at the first layer, the second layer comprising natural fibers in form of a non-woven mat within a solidified matrix of thermoplastic resin, , and
- providing injections of thermoplastic resin onto the second layer.

These steps do not have to be followed in this order. For instance, the second layer may be injected with thermoplastic resin and then placed/attached on the first layer.

In an embodiment, the method comprises cutting, shredding and/or grinding of the fiber composite product after use as an automotive interior or exterior component, and adding of the cut, shredded and/or ground fiber composite product in the forming of a non-woven mat or in injections onto the second layer or the first layer, to be used in a new fiber composite product (a recycled product). The used components or parts of the used components might also be heated and re-shaped into new products/components.

In the embodiment of colored first and/or second layers, the method may comprise dying of the natural fiber preform, natural fibers or yarn, thermoplastic resin or thermoplastic resin yarn. Coloring may be included in for instance impregnation (powder application, film lamination or autoclave impregnation) or a colored foil may be placed directly onto one of the first and/or the second layers. Especially in case the first/second layer is in a form of a dry natural fiber fabric, a colored foil added onto the first/second layer may also provide protection from surroundings. In an example, the method may further comprise commingling at least a natural fiber and a thermoplastic resin fiber to obtain at least one hybrid natural yarn. The method may further comprise weaving or knitting multiple hybrid yarns to obtain the fabric.

In an example, the method may further comprise combining the fabric with the thermoplastic resin matrix by adding a thermoplastic resin powder during weaving or knitting the hybrid yarns.

In an example, attaching the second layer to the first layer may comprise heating thereof above a pre-determined temperature, preferably at a heating tool. The pre-determined temperature may be a melting point of the thermoplastic resin. By heating, the thermoplastic resin may melt to combine with the natural fiber fabric and/or the natural fibers. Accordingly, an in-situ impregnation of the fiber composite product may be achieved. Heating can be a slow process, such as a gradual increase in the temperature, as well as a rapid heating such that heating the layer instantaneously. Heating may be also performed in cycles, such that heating and cooling may be performed sequentially.

The method may further comprise pressing of the attached first and second layer, preferably at a pressing tool (in other words a press, such as a molding press). The press may comprise movable parts with respect to each other to press the first and the second layers in between (like sandwiching) to bring the layers into a shape. In one example the second layer may be placed onto the first layer. The combined layers may be pressed (with or without heating) into a desired shape. By heating, the first and the second layers may be easily formed into the required shape, reducing a risk of fracture and damage in the layers. Further, a surface quality of the layers may be improved by providing an improved finish.

The combined layers may be first pressed in a flat press and then in a shaped press. The flat press may straighten the combined layers as well as stretch them to a reduced thickness. The layers may be heated in the flat press and/or in the shaped press. It may be preferable that heat is applied in cycles and/or rapidly after the combined first and second layers are compressed inside the shaped press without being heated. While keeping the pressed layers in the desired form heat may be further applied for a pre-determined duration and gradually decreased (cooling down the formed composite product). While cooling down, the thermoplastic resin of the first and the second layers may be solidified. Accordingly, the in-situ impregnation may start when melting the thermoplastic resin and may stop when the material is cooled and solidified.

In addition, commingling of the natural fibers and thermoplastic resin fibers before heating may improve material processability. When the natural fiber is pre-integrated with thermoplastic resin fiber (by for example film lamination), the natural fiber can already saturate with the thermoplastic resin fiber and partly lock the natural fiber into its position. By heating the commingled yarn on the other hand, the thermoplastic resin fiber within the natural fiber can melt in-situ which may provide space for the natural fiber yarn to move and stretch upon forming. When the pre-heated combination is consecutively pressed in the press (also called forming tool) as explained above, the fiber composite product may be shaped into more complex shapes without failure by breaking or unacceptable stretching. Accordingly, the production of the fiber composite product may be simplified to achieve lower cost and lower production energy consumption. The attached first and second layers may then be cooled and at least an edge of the combined first and second layers may be processed, such as cut or punched.

These and other aspects of the present disclosure will become apparent from and elucidated with reference to the examples described hereinafter.

Examples of the disclosure will be described in the following with reference to the following drawings.
- Fig. 1: shows an illustration of a life cycle of a fiber composite product according to the disclosure,
- Fig. 2: shows an embodiment of a fiber composite product according to the disclosure,
- Fig. 3a-3f: show an illustration of an example method for producing a fiber composite product according to the disclosure,
- Fig. 4a-4e: show an illustration of another example method for producing a fiber composite product according to the disclosure.

The figures are merely schematic representations and serve only to illustrate examples of the disclosure. Identical or equivalent elements are in principle provided with the same reference signs.

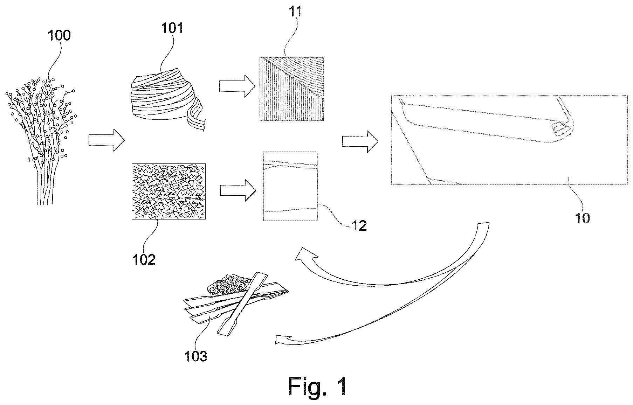

Figure 1 shows a life cycle of a fiber composite product 10. A natural material 100, here illustrated as flax plant, is processed into fine-grade natural fibers 101. The natural material 100 is also processed into low-grade natural fibers 102. The fine-grade natural fibers 101 are integrated with thermoplastic resin (not shown in Figure 1) to form the first layer 11. The low-grade natural fibers 102 are also integrated with thermoplastic resin (not shown in Figure 1) to form the second layer 12. The second layer 12 is attached to the first layer 11 and injections of thermoplastic resin 13 are provided onto the second layer 12 (not shown), forming the fiber composite product 10. After use as an automotive interior or exterior component, the fiber composite product 10 is shredded and/or ground to form low-grade natural fibers 102. The low-grade natural fibers 102 are used in the forming of the second layer 12 and/or in injections of thermoplastic resin onto the second layer 12 of a new fiber composite product (recycled product 103).

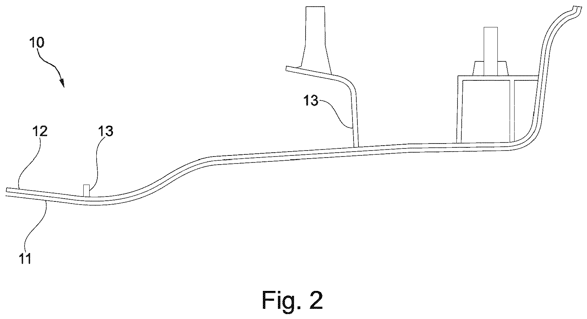

Figure 2 shows a finished fiber composite product 10 for an automotive interior or exterior component. The fiber composite product 10 comprises the first layer 11, the second layer 12 and the injections of thermoplastic resin 13 on the second layer 12. The first layer 11 comprises a natural fiber fabric within a solidified matrix of thermoplastic resin (not shown in the figures). The second layer 12 comprises natural fibers 22 in form of a non-woven mat within a solidified matrix of thermoplastic resin (not shown), which is attached to the first layer 11. Further, the fiber composite product 10 comprises injected resin on the second layer 12 extending out of the second layer 12 to form protrusions in different shapes.

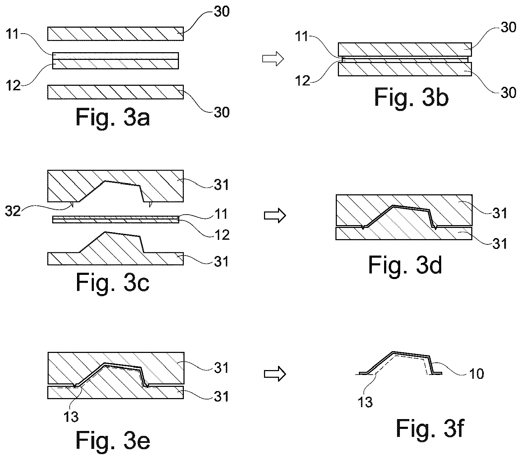

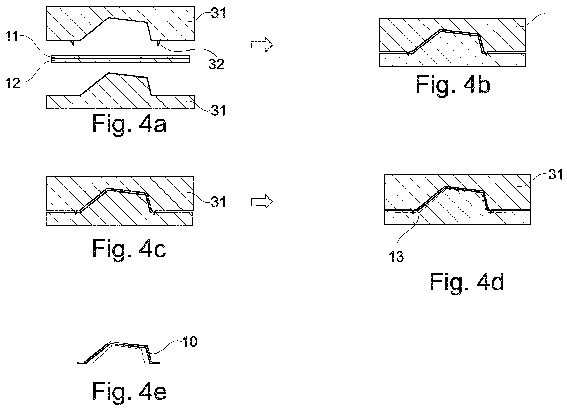

Figures 3a-3f and 4a-4e show illustrations of example methods for producing a fiber composite product 10. The method shown in Figures 3a-3f differs from the method shown in Figure 4a-4e in heating the first and the second layers 11, 12 while compression.

In Figure 3a, the first layer 11 and the second layer 12 are placed in a flat press 30, which is heated around e.g. 200°C. In Figure 3b, the heated layers 11, 12 are pressed to make the first and the second layers 11, 12 thinner. Accordingly, an in-situ impregnation of the fiber composite product 10 is achieved. In Figure 3c, the combined first and the second layers 11, 12 are placed on a shaped press 31, which is cooled down to e.g. 20-120 °C. As shown in Figures 3c and 3d, the edges of the fiber composite product 10 is cut by an accessory 32 of the shaped press 31 by joining the shaped press 31 while the fiber composite product 10 is inside. The accessory is depicted as cutters in Figures 3c and 4a. Nevertheless they can be any kind of accessory fulfilling any other function for shaping the fiber composite product 10. In Figure 3e, injections of thermoplastic resin 13 are added to the second layer 12, while the shaped press 31 is in the joined position. In Figure 3f, the fiber composite product 10 is produced.

In Figure 4a, the first layer 11 and the second layer 12 are placed in a shaped press 31 without heating the shaped press 31. Here, flattening of the combined first and second layers 11, 12 is skipped. The shaped press 31 comprises the accessory 32. In Figure 4b, the first and the second layers 11, 12 are compressed, still without application of any heat and edges of the first and the second layers 11, 12 are cut. In the step shown in Figure 4c, the shaped press 31 is heated (for instance to around 200°C, possibly in cycles) while the first and the second layers 11, 12 are inside the shaped press 31. In Figure 4d, injections of thermoplastic resin 13 are added to the second layer 12, while the shaped press 31 is in the joined position.. In Figure 4e, finished fiber composite product 10 is produced.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: natural material
- 101: fine-grade natural fibers
- 102: low-grade natural fibers
- 103: recycled product
- 10: fiber composite product
- 11: the first layer
- 12: the second layer
- 13: injections of thermoplastic resin
- 30: flat press
- 31: shaped press
- 32: accessory

## Claims

1. A fiber composite product (10) for an automotive interior or exterior component, comprising:
- a first layer (11) comprising a structured natural fiber fabric embedded within a solidified matrix of thermoplastic resin;
- a second layer (12) comprising natural fibers in form of a non-woven mat within a solidified matrix of thermoplastic resin, which is attached at the first layer (11), and
- injections of thermoplastic resin (13) onto the second layer (12).

2. The fiber composite product (10) according to claim 1, the structured natural fiber fabric comprising aligned, braided, woven or knitted natural fibers.

3. The fiber composite product (10) according to claim 1, the structured natural fiber fabric comprising commingled yarns comprising natural fibers and thermoplastic resin fibers.

4. The fiber composite product (10) according to claim 1, the structured natural fiber fabric comprising a pre-impregnated preform with a laminated thermoplastic film, powder thermoplastic resin, thermoplastic binder or thermoplastic foil.

5. The fiber composite product (10) according to claim 1, the structured natural fiber fabric comprising at least a natural fiber unidirectional tape.

6. The fiber composite product (10) according to any one of the preceding claims, the non-woven mat comprising low-grade (102) and/or recycled natural fiber.

7. The fiber composite product (10) according to any of the preceding claims, a ratio of natural fibers to synthetic material is between 20:80 by weight and 80:20 by weight, respectively, preferably between 40:60 by weight and 60:40 by weight, respectively, more preferably 50:50 by weight.

8. The fiber composite product (10) according to any one of the preceding claims, the injections of thermoplastic resin (13) forming a fastening means such as a fasting point or a fasting clip or a reinforcing rib.

9. The fiber composite product (10) according to any one of the preceding claims, the first layer (11) and/or the second layer (12) being colored, textured and/or grained.

10. The fiber composite product (10) according to any one of the preceding claims, the first and/or the second layer (12) being covered with a colored foil or fabric.

11. The fiber composite product (10) according to any one of the preceding claims, the natural fibers (102) and/or the thermoplastic resin comprising a stabilizing agent selected from a group comprising at least a UV absorber, light stabilizer, heat stabilizer, moisture scavenger and combinations thereof.

12. The fiber composite product (10) according to any one of the preceding claims, the first layer (11) having a density in a range of 50-3000 g/m², in particular 100-1500 g/m², preferably 150-500 g/m² and/or the second layer (12) having a density in a range of 300-3000g/m², in particular 450-2500g/m², preferably 600-1800g/m².

13. The fiber composite product (10) according to claim 1, consisting of the structured first layer (11), preferably in a woven structure, the injections of thermoplastic resin (13) being provided on the first layer (11).

14. A method for producing a fiber composite product (10) for an automotive interior or exterior component, comprising:
- providing a first layer (11) comprising a structured natural fiber fabric within a solidified matrix of thermoplastic resin;
- attaching a second layer (12) at the first layer (11), the second layer (12) comprising natural fibers (102) in form of a non-woven mat within a solidified matrix of thermoplastic resin, and
- providing injections of thermoplastic resin (13) onto the second layer (12).

15. The method according to claim 14, attaching the second layer (12) to the first layer (11) comprising an in-situ impregnation comprising heating the second layer (12) and/or the first layer (11) above a pre-determined temperature, preferably at a heating tool.

16. The method according to claim 14 or 15, further comprising pressing of the attached first and second layers (11, 12), preferably at a press such as a molding press, a flat press and/or a shaped press.

17. The method according to any of the preceding claims 14-16, comprising shredding and/or grinding of the fiber composite product (10) after use as an automotive interior or exterior component, and adding of the cut, shredded and/or ground fiber composite product in a forming of a non-woven mat or in injections onto a second layer (12) of a new fiber composite product (103).
